Europäisches Patentamt

European Patent Office

Office européen des brevets

(11) Publication number: **0 157 606 B1**

# EUROPEAN PATENT SPECIFICATION

(45) Date of publication of patent specification: **20.05.92**      (51) Int. Cl.⁵: **G01L 9/00**, G01L 11/00

(21) Application number: **85302195.4**

(22) Date of filing: **29.03.85**

(54) **High temperature pressure transducers and systems for determining deflection of pressure transducer diaphragms.**

(30) Priority: **30.03.84 US 595114**
**03.04.84 US 596481**

(43) Date of publication of application:
**09.10.85 Bulletin 85/41**

(45) Publication of the grant of the patent:
**20.05.92 Bulletin 92/21**

(84) Designated Contracting States:
**DE FR GB IT SE**

(56) References cited:
**GB-A- 2 086 572      GB-A- 2 102 941**
**GB-A- 2 115 548      US-A- 3 040 583**
**US-A- 3 503 116      US-A- 3 590 640**
**US-A- 4 158 310      US-A- 4 495 819**

(73) Proprietor: **INTERNATIONAL CONTROL AUTO-
MATION FINANCE S.A.
16 Rue des Bains
Ville de Luxembourg(LU)**

(72) Inventor: **Berthold III, John W.
1370 N. Union Avenue
Salem Ohio 44460(US)**
Inventor: **Thompson, Larry B.
987 Jefferson Avenue
Salem Ohio 44460(US)**
Inventor: **Jeffers, Larry A.
4080 Beechwood Avenue
Alliance Ohio 44601(US)**

(74) Representative: **Cotter, Ivan John et al
D. YOUNG & CO. 10 Staple Inn
London WC1V 7RD(GB)**

## Description

This invention relates to high temperature pressure transducers and to systems for determining the deflection of pressure transducer diaphragms.

Accurate pressure measurements in high temperature applications, such as in the gas path of an aircraft engine, are required in order to monitor and improve the fuel efficiency, performance, and reliability of the engine. Gas path pressure measurements in severe environments have traditionally been performed through measurement of the deflection of metallic diaphragms. The resulting mechanical deflection of the diaphragm is converted into an electrical signal by several approaches. One method utilizes a resistive strain gauge mounted to the center of the diaphragm. Another method utilizes a change in capacitance between the moving diaphragm and a fixed reference surface. Both of these approaches produce acceptable results at relatively low temperatures. However, at temperatures in excess of 500°C, the creep of the metallic diaphragm accelerates, which results in a long-term drift of the pressure transducer output signal versus pressure calibration curve. In addition, it has been found that hysteresis in this calibration curve may become significant when these pressure transducers are operated at these high temperatures.

In order to reduce or eliminate the undesirable creep and hysteresis effects exhibited by metallic diaphragms at high temperatures, alternative diaphragm materials with improved high-temperature properties must be utilized. For example, various types of glasses and glass ceramics have excellent dimensional stability and these materials can replace metal as the material for pressure transducer diaphragms. Unfortunately, the hardness and rigidity of these materials, along with their inherent brittleness, dictate a diaphragm design that results in a smaller deflection with pressure than the deflection achievable with metallic diaphragms. These smaller deflections, in turn, necessitate the use of sensing techniques having significantly increased sensitivity so that the deflections can be measured. Such increased sensitivity allows the measurements to be affected by dynamic vibration and temperature changes which may result in inaccurate measurements of diaphragm deflection.

US Patent No. US-A-3 503 116 discloses a method of fabricating a pressure transducer formed of a thin pressure-sensitive glass diaphragm retained on a glass cladding wall, such that variations in pressure cause the diaphragm to be displaced. Optical fibers transmit light on to a reflecting surface of the diaphragm, and the reflected light is detected. The intensity of the detected light depends on the position of the diaphragm. The transducer has a number of uses, for example as a high sensitivity microphone, but is not suitable for pressure measurement in high temperature environments.

UK Patent Application No. GB-A-2 086 572 discloses apparatus for measuring small displacements of a pressure transducer diaphragm by sensing shifts in interference patterns created by reflection of light from the surface of the diaphragm. In one arrangement, the diaphragm has a thicker and thus more rigid central region, with light transmitting/receiving locations being provided on opposite sides of the central region. The wavelengths of the resulting fringes are then measured to determine the displacement on each side of the diaphragm.

According to the present invention there is provided a high temperature pressure transducer comprising a base member, a diaphragm member connected to the base member, the base member and the diaphragm member being formed from a fused silica material, and a gap located between the base member and the diaphragm member allowing deflection of the diaphragm member in response to variations in the pressure applied thereto, wherein the surface flatness of the contact between the base member and the diaphragm member is about one tenth of the wavelength of light.

According to a preferred embodiment of the invention described hereinbelow there is provided a system comprising, in combination, a pressure transducer as set forth above, and an arrangement for determining the deflection of the disphragm member of the transducer, the arrangement comprising a light source, means for transmitting light produced by the light source to the diaphragm member at a first location thereon, means for transmitting light produced by the light source to the diaphragm member at a second location thereon, the first and second locations being radially offset from one another, means for receiving light reflected from the first location on the diaphragm member, means for receiving light reflected from the second location on the diaphragm member, the light reflected from said first and second locations forming interference fringe patterns at their respective receiving means, and means for counting the interference fringe patterns to produce a determination as to the deflection of the diaphragm member.

The preferred embodiment of the invention described hereinbelow provides a diaphragm-type pressure transducer and associated diaphragm deflection sensing apparatus that can be used in a high temperature environment, is sensitive to relatively small diaphragm deflections, and is unaffected by dynamic vibration and temperature changes. The preferred transducer comprises a fused silica diaphragm assembly and associated fiber optic diaphragm deflection detecting apparatus. The diaphragm assembly comprises a fused silica diaphragm optically contacted to a fused silica platform. A first pair of transmit and receive optical fibers is positioned in the center of a gap between the diaphragm and the platform and a second pair of transmit and receive optical fibers is similarly terminated in the gap but is offset from the first pair. A coherent laser source illuminates the bottom surface of the diaphragm via both transmit optical fibers. The light reflected by the bottom surface of the diaphragm causes an interference fringe pattern to be created which is intercepted by the receive optical fibers. Through photodetectors and a fringe counting circuit, an interference fringe count is made which, in turn, is utilized to determine the amount of diaphragm deflection.

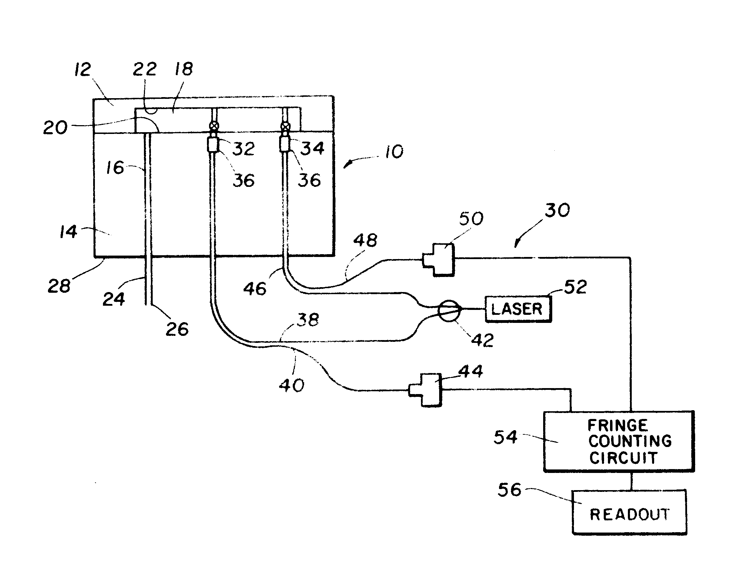

The invention will now be further described, by way of illustrative and non-limiting example, with reference to the accompanying drawing, which is a front elevation view schematically representing a pressure transducer embodying the invention.

The sole figure of the drawing illustrates a modular fused silica diaphragm assembly 10 and associated apparatus 30, shown schematically, to measure diaphragm deflection. The diaphragm assembly 10 comprises a fused silica diaphragm 12 optically contacted to a fused silica platform 14. The optical contact between the diaphragm 12 and the platform 14 requires a surface flatness of $\lambda/10$. Such surface flatness can be achieved and results in a true molecular bond between the diaphragm 12 and the platform 14.

The fused silica diaphragm 12 is typically formed from a solid disc which may be drilled or etched to the proper depth to obtain the desired diaphragm thickness. The diaphragm 12 and the platform 14 are formed from identical material, fused silica, and require no external support structure, thus minimizing thermal stresses. The platform 14 has an aperture 16 provided therethrough which terminates in the gap 18 located between the top reference surface 20 of the platform 14 and the bottom reference surface 22 of the diaphragm 12. A quartz tube 24 with a tip-off constriction 26 can be fused to the bottom 28 of the platform 14 to permit the introduction of a reference pressure into the gap 18 through the tube 24 and the aperture 16. After the reference pressure has been introduced into the gap 18, the constriction 26 can be tipped-off to seal the reference pressure port.

The apparatus 30 utilized for measuring diaphragm deflection utilizes a "fringe-counting" technique to measure such deflection. With this apparatus 30, two polished blind bores 32, 34 are provided in the top reference surface 20 of the platform 14. Blind bore 32 is located near the center of the top reference surface 20 and blind bore 34 is positioned adjacent the junction of the top reference surface 20 and the inner edge of the diaphragm 12. A gradient index rod lens 36 is provided in each blind bore 32, 34. A single mode optical fiber 38 and a multimode optical fiber 40 pass through the platform 14 and interconnect the gradient index rod lens 36 provided in the blind bore 32 to a 3db coupler 42 and a photodetector 44, respectively. Similarly, a single mode optical fiber 46 and a multimode optical fiber 48 pass through the platform 14 and interconnect the gradient index rod lens 36 provided in the blind bore 34 to the 3 db coupler 42 and a photodetector 50. A coherent laser source 52 is connected to the input to the 3 db coupler 42. The outputs of the photodetectors 44, 50 are connected to a fringe counting circuit 54 containing state-of-the-art devices, whose operation will be hereinafter described. The output of the counting circuit 54 is connected to an appropriate readout device 56.

Operationally, light from the laser source 52 is transmitted to the 3 db coupler 42 where it is divided and delivered to the gradient rod index lens 36 provided in each of the blind bores, 32, 34 via the single mode optical fibers 38, 46, respectively. The gradient rod index lenses 36 project collimated light beams onto the bottom surface 22 of the diaphragm 12; the collimated light beam emanating from the gradient rod index lens 36 provided in blind bore 32 intercepting the bottom surface of the diaphragm near the center thereof, and the collimated light beam emanating from the gradient rod index lens 36 provided in blind bore 34 intercepting the bottom surface of the diaphragm at a location offset from the center thereof. The foregoing collimated light beams are partially reflected by the bottom reference surface 22 of the diaphragm 12 and the top reference surface 20 of the platform 14 causing the production of interference fringe patterns on each gradient index rod lens 36. These interference fringe patterns are focused by the lenses 36 onto the ends of the multimode optical fibers 40, 48. As the diaphragm 12 deflects, the interference fringe patterns move unidirectionally across the input face of the multimode optical fibers 40, 48. The direction of movement depends upon whether the diaphragm 12 is deflecting toward or away from the top reference surface 20 of the platform 14. The resulting output current of the photodetectors 44, 50 has the same cosine squared time dependence with fringe position as does the spatial light intensity distribution across the fringes.

The fringe counting circuit 54 is comprised primarily of an up/down counting device controlled by logic gates. By the appropriate choice of the trigger threshold, one of the photodetectors 44, 50 can be utilized as an input to the up/down counting device through the logic gates. Each bright-dark fringe pair of the interference fringe pattern is divided into four parts and the logic gates generate digital "high" signals and digital "low" signals which correspond to individual counts having $\lambda/8$ precision, wherein $\lambda$ is the laser wavelength. The output of the remaining photodetector 44 or 50 is utilized to determine whether the counting device is to add or subtract the signals received from the first photodetector. In order to accomplish the foregoing, the outputs of the photodetectors 44, 50 must be out of phase. The decision to add or subtract the signals from the first photodetector is dependent upon whether the outputs of both phototectors 44, 50 are simultaneously increasing or decreasing. The up/down counting device thus maintains a running total of the interference fringe count.

The magnitude of the interference fringe count, m, is directly proportional to the deflection, $\Delta h$, of the diaphragm 12 through the following equation:

$$2 \Delta h = m \lambda$$

Thus, by digitally determining the fringe count, the deflection of the diaphragm 12 can be sensed and the amount of deflection can be accurately determined. Inasmuch as digital techniques are utilized, no signal conditioning or analog processing is required. In addition, since the interference fringe pattern is formed only at the gradient rod index lenses 36, temperature and/or vibration in the multimode optical fibers 40, 48 cannot affect the fringe pattern. Furthermore, relative optical phase shifts induced by the single mode optical fibers 38, 46 become unimportant inasmuch as such phase shifts affect the reflected beams from the bottom reference surface 22 of the diaphragm 12 and the top reference surface 20 of the platform 14 identically. Phase preservation is not required for light to be conducted to the photodetectors 44, 50 via the multimode optical fibers 40, 48 which act as a conduit for the light emanating from a bright fringe or no light from a dark fringe.

Performance-wise, the inherent dynamic range of the foregoing system is high because the fringe count, m, changes in direct proportion to the deflection, $\Delta h$, of the diaphragm 12. The displacement sensitivity of this approach is $\lambda/8$, which for red light corresponds to 0.09 $\mu$m. Assuming the diaphragm 12 has a 40 mm diameter and a 0.6 mm thickness, the minimum detectable pressure which corresponds to the foregoing displacement sensitivity is approximately 3.5 $KP_a$ which is about 0.4% of the maximum allowable full-scale pressure of 690 $KP_a$. Such sensitivity is equivalent to many commercially available strain gauge or capacitive pressure transducers. However, such transducers cannot tolerate the significantly higher operating temperatures which have no adverse effect on fused silica devices. And lastly, it should be noted that the fused silica diaphragm assembly 10 is also inherently linear since the deflection of the diaphragm is linear with pressure and the interference fringe order is linear with diaphragm deflection.

## Claims

1. A high temperature pressure transducer comprising a base member (14), a diaphragm member (12) connected to the base member (14), the base member (14) and the diaphragm member (12) being formed from a fused silica material, and a gap (18) located between the base member (14) and the diaphragm member (12) allowing deflection of the diaphragm member in response to variations in the pressure applied thereto, wherein the surface flatness of the contact between the base member (14) and the diaphragm member (12) is about one tenth of the wavelength of light.

2. A high temperature pressure transducer according to claim 1, including means (16, 24) for introducing a reference pressure in the gap (18).

3. A high temperature pressure transducer according to claim 1, or claim 2, wherein a portion of the diaphragm member (12) is offset from the base member (14) to form the gap (18) located between the base member (14) and the diaphragm member (12).

4. A system comprising, in combination, a high temperature pressure transducer according to claim 1, claim 2 or claim 3, and an arrangement for determining the deflection of the diaphragm member (12) of the transducer, the arrangement comprising a light source (52), means (38) for transmitting light produced by the light source (52) to the diaphragm member (12) at a first location thereon, means (46) for transmitting light produced by the light source (52) to the diaphragm member (12) at a second location thereon, the first and second locations being radially offset from one another, means (40) for receiving light reflected from the first location on the diaphragm member (12), means (48) for receiving light reflected from the second location on the diaphragm member (12), the light reflected from said first and second locations forming interference fringe patterns at their respective receiving means (40, 48), and means (54) for counting the interference fringe patterns to produce a determination as to the deflection of the diaphragm member (12).

5. A system according to claim 4, wherein the means (38) for transmitting light produced by the light source (52) to the first location on the diaphragm member (12) and the means (46) for transmitting light produced by the light source (52) to the second location on the diaphragm member (12) comprise optical fiber means.

6. A system according to claim 5, including means (42) for coupling the light source (52) to ends of the optical fiber means (38, 46).

7. A system according to claim 4, claim 5 or claim 6, wherein the means (40) for receiving light reflected from the first location on the diaphragm member (12) and the means (48) for receiving light reflected from the second location on the diaphragm member (12) comprise optical fiber means.

8. A system according to claim 7, including means (36) for focusing the interference fringe patterns on ends of the optical fiber means (40, 48).

9. A system according to any one of claims 4 to 8, wherein the first location on the diaphragm member (12) is at the approximate center thereof and the second location on the diaphragm member (12) is offset from the approximate center thereof.

10. A system according to any one of claims 4 to 9, wherein the light source (52) is a coherent laser source.

**Revendications**

1. Capteur de pression à température élevée comprenant une base (14), un diaphragme (12) relié à la base (14), la base (14) et le diaphragme (12) étant faits d'un matériau de silice fondue, et un espace (18) situé entre la base (14) et le diaphragme (12) permettant le fléchissement du diaphragme en réponse aux variations de pression appliquée sur lui, dans lequel la surface plate du contact entre la base (14) et le diaphragme (12) est égale à un dixième environ de la longueur d'onde de la lumière.

2. Capteur de pression à température élevée selon la revendication 1, comprenant un moyen (16, 24) pour introduire une pression de référence dans l'espace (18).

3. Capteur de pression à température élevée selon la revendication 1, ou 2, dans lequel une portion du diaphragme (12) est décalée de la base (14) pour former l'espace (18) situé entre la base (14) et le diaphragme (12).

4. Système comprenant, conjointement, un capteur de pression à température élevée selon la revendication 1, 2 ou 3, et un agencement pour déterminer le fléchissement du diaphragme (12) du capteur, l'agencement comprenant une source lumineuse (52), un moyen (38) pour transmettre la lumière produite par la source lumineuse (52) au diaphragme (12) à un premier emplacement sur celui-ci, un moyen (46) pour transmettre la lumière produite par la source lumineuse (52) au diaphragme (12) à un second emplacement sur celui-ci, le premier et le second emplacement étant décalés radialement l'un de l'autre, un moyen (40) pour recevoir la lumière réfléchie depuis le premier emplacement sur le diaphragme (12), un moyen (48) pour recevoir la lumière réfléchie depuis le second emplacement sur le diaphragme (12), la lumière réfléchie depuis ledit premier et ledit second emplacement formant des franges d'interférence à leur moyen de réception (40, 48) respectif, et un moyen (54) pour compter les franges d'interférence afin de déterminer le fléchissement du diaphragme (12).

5. Système selon la revendication 4, dans lequel le moyen (38) pour transmettre la lumière produite par la source lumineuse (52) au premier emplacement sur le diaphragme (12) et le moyen (46) pour transmettre la lumière produite par la source lumineuse (52) au second emplacement sur le diaphragme (12) comprennent des fibres optiques.

6. Système selon la revendication 5, comprenant un moyen (42) pour coupler la source lumineuse (52) aux extrémités des fibres optiques (38, 46).

7. Système selon la revendication 4, 5 ou 6, dans lequel le moyen (40) pour recevoir la lumière réfléchie depuis le premier emplacement sur le diaphragme (12) et le moyen (48) pour recevoir la lumière réfléchie depuis le second emplacement sur le diaphragme (12) comprennent des fibres optiques.

8. Système selon la revendication 7, comprenant un moyen (36) pour concentrer les franges d'interférence sur les extrémités des fibres optiques (40, 48).

9. Système selon l'une quelconque des revendications 4 à 8, dans lequel le premier emplacement sur le diaphragme (12) se trouve à peu près au centre de celui-ci et le second emplacement sur le diaphragme (12) est décalé du centre approximatif de celui-ci.

10. Système selon l'une quelconque des revendications 4 à 9, dans lequel la source lumineuse (52) est une source de laser cohérente.

**Patentansprüche**

1. Hochtemperaturdruckwandler mit einem Basisteil (14), einem mit dem Basisteil (14) verbundenen Diaphragmateil (12), wobei das Basisteil (14) und das Diaphragmateil (12) aus einem geschmolzenen Kieselsäuremateial gebildet sind, und einem Spalt (18), der zwischen dem Basisteil (14) und dem Diaphragmateil (12) liegt und eine Durchbiegung des Diaphragmateils in Reaktion auf Veränderungen des auf es ausgeübten Druckes erlaubt, wobei die Oberflächenebenheit des Kontaktes zwischen dem Basisteil (14) und dem Diaphragmateil (12) etwa ein Zehntel der Wellenlänge von Licht ist.

2. Hochtemperaturdruckwandler nach Anspruch 1 mit Einrichtungen (16, 24) zum Einführen eines Bezugsdruckes in den Spalt (18).

3. Hochtemperaturdruckwandler nach Anspruch 1 oder Anspruch 2, bei dem ein Teil des Diaphragmateils (12) gegenüber dem Basisteil (14) versetzt ist, um den zwischen dem Basisteil (14) und dem Diaphragmateil (12) liegenden Spalt (18) zu bilden.

4. System in Kombination mit einem Hochtemperaturdruckwandler nach Anspruch 1, Anspruch 2 oder Anspruch 3 und einer Anordnung zur Bestimmung des Durchbiegens des Diaphragmateils (12) des Wandlers, wobei die Anordnung eine Lichtquelle (52), eine Einrichtung (38) zur Übertragung von von der Lichtquelle (52) erzeugtem Licht zu dem Diaphragmateil (12) an einer ersten Stelle desselben, einer Einrichtung (46) zur Übertragung von von der Lichtquelle (52) erzeugtem Licht zu dem Diaphragmateil (12) an einer zweiten Stelle desselben, wobei die erste und zweite Stelle radial gegeneinander versetzt sind, einer Einrichtung (40) zum Empfangen von Licht, das von der ersten Stelle auf dem Diaphragmateil (12) reflektiert wird, einer Einrichtung (48) zum Empfangen von Licht, das von der zweiten Stelle auf dem Diaphragmateil (12) reflektiert wird, wobei das von der ersten und zweiten Stelle reflektierte Licht an ihren jeweiligen Empfangseinrichtungen (40, 48) Interferenzstreifenbilder bilden, und einer Einrichtung (54) zum Zählen der Interferenzstreifenbilder, um die Durchbiegung des Diaphragmateils (12) zu bestimmen.

5. System nach Anspruch 4, bei dem die Einrichtung (38) zur Übertragung von von der Lichtquelle (52) erzeugtem Licht zu der ersten Stelle auf dem Diaphragmateil (12) und die Einrichtung (46) zur Übertragung von von der Lichtquelle (52) erzeugtem Licht zu der zweiten Stelle auf dem Diaphragmateil (12) optische Fasereinrichtungen umfassen.

6. System nach Anspruch 5 mit einer Einrichtung (42) zur Verbindung der Lichtquelle (52) mit Enden deroptischen Fasereinrichtungen (38, 46).

7. System nach Anspruch 4, Anspruch 5 oder Anspruch 6,bei dem die Einrichtung (40) zum Empfangen von Licht, das von der ersten Stelle auf dem Diaphragmateil (12) reflektiert wird, und die Einrichtung (48) zum Empfangen von Licht, das von der zweiten Stelle auf dem Diphragmateil (12) reflektiert wird, optische Fasereinrichtungen umfassen.

8. System nach Anspruch 7 mit einer Einrichtung (36) zum Fokussieren der Interferenzstreifenbilder an Enden der optischen Fasereinrichtungen (40, 48).

9. System nach einem der Ansprüche 4 bis 8, bei dem die erste Stelle auf dem Diaphragmateil (12) ungefähr in dessen Mitte liegt und die zweite Stelle auf dem Diaphragmateil (12) gegenüber der ungefähren Mitte desselben versetzt ist.

10. System nach einem der Ansprüche 4 bis 9, bei dem die Lichtquelle (52) eine kohärente Laserquelle ist.